# FASCICULE DE BREVET EUROPEEN

(11) **EP 1 725 363 B1**
(45) Date de publication et mention de la délivrance du brevet: **29.12.2010**
(21) Numéro de dépôt: 05730757.1
(22) Date de dépôt: 18.02.2005
(51) Int. Cl.: B23D 65/00, B23K 26/34

(54) **PROCEDE DE FABRICATION D UNE LAME TRANCHANTE**
VERFAHREN ZUR HERSTELLUNG EINES SCHNEIDMESSERS
METHOD OF PRODUCING A CUTTING BLADE

(30) Priorité: 18.02.2004 FR 0401616; 08.04.2004 FR 0403711
(43) Date de publication de la demande: 29.11.2006
(73) Titulaire: Société d'exploitation Tarrerias Bonjean, 63250 Celles sur Durolle (FR)
(72) Inventeur: TARRERIAS, Eric, F-63430 Pont du Chateau (FR)
(74) Mandataire: Schouller, Jean-Philippe
(86) Numéro de dépôt international: PCT/FR2005/000390
(87) Numéro de publication internationale: WO 2005/089995

(56) Documents cités:
- WO-A-01/02118
- WO-A-03/000457
- CA-A- 2 451 514
- DE-A- 3 219 260
- DE-A- 4 130 207
- FR-A- 2 452 528
- US-A1- 2003 019 111
- US-A1- 2006 146 476

## Description

L'invention a trait à un procédé de fabrication d'une lame pour outil tranchant, notamment pour un couteau, une paire de ciseaux, une scie, un appareil ménager ou électroménager ou encore une machine industrielle, cette lame comprenant au moins une arête tranchante s'étendant sur au moins une partie de sa périphérie.

Au sens de l'invention, un outil tranchant d'un appareil ménager ou électroménager comprend des lames de hachoir, de trancheuse, cela que l'outil tranchant possède une lame pourvue d'une arête rectiligne ou non rectiligne, qu'il soit entraîné manuellement ou par une force motrice externe. Cet outil peut être, par exemple, une machine industrielle à lame circulaire, ou encore à lame annulaire, utilisée dans les industries agro-alimentaires, notamment les abattoirs.

Ces lames sont utilisées pour trancher ou couper différents matériaux et sont réalisées en métal ou en un alliage métallique. Notamment, ces lames sont réalisées en aciers inoxydables dont les duretés sont adaptées à l'utilisation de l'outil. Dans tous les cas, ces aciers sont avantageusement conformes aux normes et/ou règlements en vigueur sur l'alimentarité c'est-à-dire concernant les propriétés physiques et/ou chimiques des matériaux en contact avec les aliments. On peut également rencontrer des lames réalisées à partir d'une ou de plusieurs céramiques ou d'autres matériaux susceptibles d'assurer la coupe ou le tranchage lorsqu'ils sont utilisés dans des conditions particulières.

Ces lames ont en commun d'être équipées d'au moins une arête tranchante, cette arête formant la zone de la lame en contact, par au moins un point, avec le matériau à couper. De telles lames sont susceptibles de présenter une usure prématurée de l'arête tranchante, notamment en cas d'utilisation répétée et/ou de mauvaise utilisation. Il est alors nécessaire de reformer cette arête tranchante par affûtage, aiguisage ou meulage. Dans tous les cas, cette opération ne peut être répétée indéfiniment. En effet, elle nécessite la formation de l'arête tranchante dans une zone de la lame, proche du dos de cette dernière, d'épaisseur croissante au fur et à mesure de la répétition de cette opération.

On connaît des procédés où l'arête tranchante est d'une dureté supérieure à la dureté du reste de la lame afin d'en limiter l'usure. En particulier, WO-A-03/000457 décrit un procédé où, sur la lame d'une scie, une matière est déposée sous forme pulvérulente, mélangée et solidifiée à l'aide d'un laser, préalablement à la mise en forme de l'arête tranchante. La mise en forme de l'arête tranchante s'effectue entre des rouleaux de type laminoir qui mettent en forme, à chaud, l'arête tranchante. Le laser permet d'amener la matière à température. Un tel dispositif est particulièrement adapté aux lames en forme de bande mais ne peut être utilisé sur tout type de lame. De plus, la liaison entre le corps de lame et le matériau mis en forme n'est pas optimal.

On connaît également des procédés dits de rechargement où sur une arête d'une lame tranchante on dépose un revêtement en matériau dur. De tels procédés, utilisant par exemple la microsoudure, sont décrits dans PATENT ABSTRACTS OF JAPAN vol.2000 n°17, JP-A-01029288.

PATENT ABSTRACTS OF JAPAN vol.0120 n°27, JP-A-62 18 1836 décrit le rechargement à l'aide d'un film sur l'arête tranchante d'une lame par plaquage ionique. Cela peut se faire également par vaporisation sous l'effet d'une flamme tel que décrit dans EP-A-0707921. On peut également envisager le dépôt d'un 5 matériau d'appoint sur une lame après avoir chauffé ce matériau à une température inférieure à sa température de fusion et le presser sur le corps de lame de manière à ce qu'il adhère à celui-ci, avant la mise en forme du tranchant, ceci a notamment été décrit dans DE-A-3208153.

Dans aucun de ces documents, on ne retrouve un procédé permettant de lier de manière efficace et durable un matériau d'appoint au reste de la lame de manière à ce que, lors de la formation de l'arête tranchante, la solidité et les propriétés mécaniques de l'ensemble soient préservées.

C'est à ces inconvénients qu'entend plus particulièrement remédier l'invention en proposant un procédé de fabrication d'une lame permettant de préserver l'arête tranchante de la lame et, ainsi, d'augmenter la durée de vie de cette dernière.

A cet effet, l'invention a pour objet un procédé de fabrication selon la revendication 1 annexée.

US 2003/0019111 est considéré comme état de technique plus proche et montre un procédé de fabrication d'une lame pour outil tranchant, (notamment pour un couteau) cette lame étant réalisée en un acier ou un alliage d'aciers inoxydables et comprenant au moins une arête tranchante s'étendant sur au moins une partie de sa périphérie, comprenant les étapes suivantes:
- réaliser un corps de lame possédant au moins un bord libre prévu au voisinage de l'emplacement de la ou de chaque arête tranchante,
- alimenter sur au moins un bord libre un matériau d'appoint d'une dureté supérieure à la dureté du corps de la lame,
- soumettre le matériau d'appoint à un faisceau laser de manière à former une bande sur au moins une partie du dit bord libre,
- former l'arête tranchante dans la bande de matériau d'appoint,
on effectue une opération de trempe et revenu sur le corps de la lame, équipé du cordon ou de la bande de matériau d'appoint,
et on réalise l'intégralité de l'étape de mise en forme de cette arête tranchante à froid, lorsque le corps de lame ainsi que le cordon ou la bande ne sont plus malléables, après l'opération de trempe et revenu. >

Ainsi, grâce au procédé de l'invention, on réalise une lame dont l'arête tranchante est formée dans un matériau d'appoint d'une dureté supérieure à la lame. Ceci permet d'obtenir une lame dont la qualité et la durée de vie du tranchant sont supérieures à celles couramment rencontrées. Ce procédé de fabrication d'une lame confère à celle-ci une grande modularité et l'utilisation d'un faisceau laser assure une fusion intime entre le corps de la lame et le matériau d'appoint.

Des aspects avantageux mais non obligatoires de l'invention font l'objet des revendications 2 à 11 annexées.

L'invention sera mieux comprise et d'autres avantages de celle-ci apparaîtront plus clairement à la lumière de la description qui va suivre de deux modes de mise en oeuvre d'un procédé de fabrication conforme à l'invention, donnée uniquement à titre d'exemple et faite en se référant aux dessins annexés dans lesquels :
- la figure 1 est une vue en perspective d'une lame pour outil tranchant réalisée conformément à l'invention,
- la figure 2 est une vue de côté du corps de la lame représenté à la figure 1, lors de l'étape a) d'un premier mode de mise en oeuvre du procédé, sans le matériau d'appoint,
- la figure 3 est une vue de face illustrant les étapes b) et c) de ce procédé de fabrication, un agrandissement illustrant un type de poudre comportant deux éléments,
- les figures 4 et 5 sont des vues de côté analogues à la figure 2 illustrant l'étape d) de ce procédé et
- les figures 6 à 11 illustrent un second mode de mise en oeuvre du procédé.

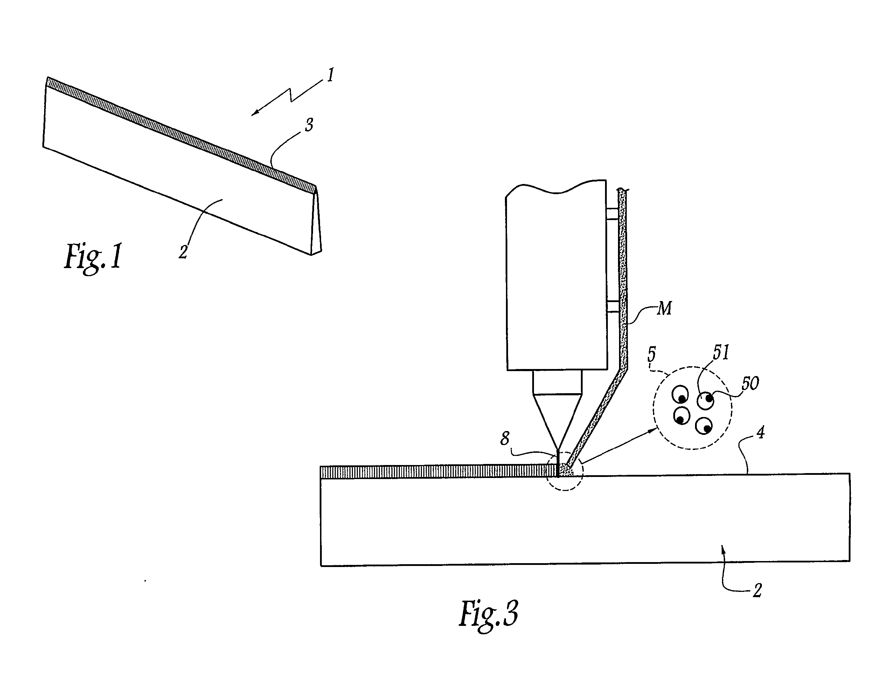

La lame 1 représentée à la figure 1 est une représentation simplifiée d'une lame. Celle-ci est, par ailleurs, équipée d'un support ou d'un moyen de fixation, non représenté, de la lame, et/ou d'un moyen de préhension également non représenté de la lame, par exemple un manche. Cette lame 1 présente un corps de lame 2 dont les dimensions sont légèrement inférieures à la dimension globale de la lame 1 finie. Ce corps de lame 2 supporte une arête tranchante 3 dont au moins le fil, c'est-à-dire la zone en contact avec le produit à couper, est formé par du matériau d'appoint. Le corps de lame 2 est réalisé en au moins un acier inoxydable, avantageusement de qualité alimentaire. Il s'agit par exemple d'aciers de type, selon la norme AISI : 304L, 316L, 410, 420A, 420B, 420 C, 425, 431, 440A, 440B, 440C, ou d'aciers tels ceux commercialisés par la société SANDVIK sous les références 12C27 et 19C27. La réalisation du corps 2 de la lame est effectuée par des techniques connues en soi, comme par exemple l'usinage, le moulage, le forgeage, le frittage, le meulage, le découpage ou le découpage par laser.

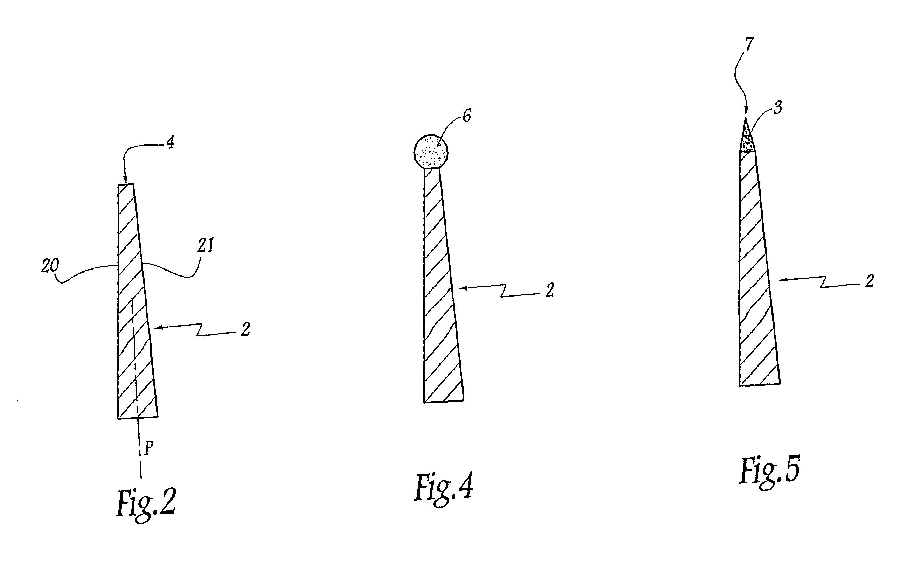

Dans un premier mode de réalisation du procédé le corps 2 de la lame a ses côtés latéraux 20, 21 légèrement convergents l'un vers l'autre de manière à former un bord libre sur le corps de la lame. Ce bord libre est en l'espèce un méplat 4, visiblement sur la figure 2, perpendiculaire à un plan principal P du corps de lame 2. Comme illustré à la figure 3, on dépose, dans une deuxième étape du procédé, sur ce bord libre 4 une poudre 5, ou un mélange de poudres, de préférence sous pression, d'un matériau d'appoint M. Cette poudre ou ce mélange de poudres, comprend au moins deux éléments 50, 51 formant le matériau d'appoint M. L'un de ces éléments est une particule 50 d'une dureté élevée. Avantageusement, c'est un carbure de titane. L'autre élément est une particule d'acier inoxydable 51, de qualité alimentaire, avantageusement de même type que celui composant le corps de lame 2.

Compte tenu des différentes propriétés physiques et mécaniques des éléments 50 et 51 composant le matériau d'appoint M sous forme pulvérulente, lors de leur projection sur le bord libre 4 du corps de la lame, on observe des variations dans l'écoulement de la poudre 5. Pour maintenir un cordon 6 de poudre déposée homogène, on relie, par exemple par inclusion, deux particules 50, 51 de type différent. Avantageusement, on inclut des particules 50 de carbure de titane dans des particules 51 d'acier inoxydable. Cette inclusion peut être totale, le carbure de titane formant alors le noyau d'une particule formée de deux matériaux, ou partielle, par enchâssement de la particule de carbure de titane dans une cavité ménagée dans une particule d'acier inoxydable.

Dans une autre configuration, les particules 50 de carbure de titane sont agglomérées entre elles par un liant afin d'obtenir des agglomérats de particules de carbure de titane de taille favorisant leur écoulement.

Dans une variante, l'homogénéité de la poudre 5 est obtenue par un liant permettant d'assurer la liaison entre les particules d'acier inoxydable ou de carbure de titane.

Ainsi, on réalise une poudre 5 qui, malgré les différences de densité et/ou de forme des particules 50, 51 qui la composent, présente une composition homogène en tous points du cordon 6 de poudre 5 déposé sur le bord libre 4 du corps de lame 2, les particules 50, 51 étant globalement régulièrement réparties.

En même temps que cette poudre ou ce mélange de poudres, sous pression est projetée, elle est, de manière concomittente à son dépôt, soumise à un faisceau laser 8 de manière à être amenée à une température de fusion telle que la poudre 5 en cordon 6 fusionne intimement avec le corps de lame 2. Cette technique est connue dans le domaine des revêtements de surface comme une méthode de rechargement. A titre d'exemple illustrant cette technique en tant que telle, on se référera par exemple au site internet www.irepa-laser.com ou encore à la publication « traitement de surface d'un gaz léger par plasma produit par laser en vue d'améliorer la résistance mécanique » par Monsieur SICARD, GREMI ORLEANS.

Une fois le cordon 6 déposé et fusionné sur le bord 4, il s'agit de réaliser une opération de finition afin de former l'arête tranchante 3 proprement dite. Cette opération consiste par un usinage ou un meulage pour mettre en forme le cordon 6 de manière à ce que celui-ci présente un fil tranchant 7 tel qu'illustré à la figure 5.

En variante, il est possible de réaliser l'opération de finition de l'arête tranchante 3 en même temps que l'opération de finition du corps de lame 2. Dans ce cas le cordon 6 est déposé sur le corps de lame 2 avant de procéder à la finition telle qu'évoquée ci-dessus. Le meulage ou l'usinage sont alors effectués, non seulement sur le cordon 6 mais également sur le corps de lame 2. L'usinage ou le meulage s'effectuent par des moyens connus, par exemple à l'aide de meules en diamant.

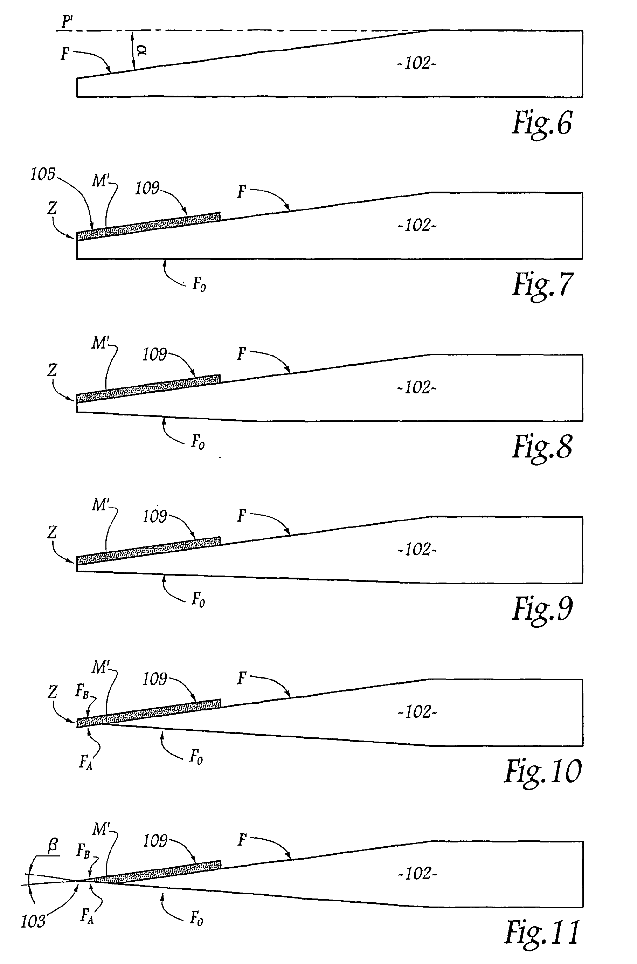

Dans un autre mode de mise en oeuvre du procédé tel qu'illustré aux figures 6 à 11, la poudre 105 est projetée non pas sur un méplat 4 du corps de lame mais sur une face F de cette dernière, légèrement inclinée en direction de l'arête tranchante 103. Cette face F du corps de lame 102 est réalisée préalablement au dépôt de matériau d'appoint M.

Cette face F est orientée angulairement, selon un angle α non nul par rapport à un plan principal P' du corps 102 de la lame.

Cette inclinaison permet de déposer, comme illustré à la figure 7, un cordon ou une bande 109 de matériau d'appoint M' en poudre 105.

Le dépôt et le frittage de la poudre 105 de matériau d'appoint s'effectuent de manière à ce qu'une des zones d'extrémités Z de la bande 109 soit adjacente à l'extrémité de la face F du corps de lame 102.

Avantageusement, après cette étape de dépôt et de frittage de la poudre 5 ou 105 de matériau d'appoint sur le corps 2 ou 102 de lame, on effectue une opération de trempe et revenu, de façon connue en soi. Cette trempe et revenu permet de « libérer » les contraintes subies par le corps 2 ; 102 de lame et/ou le matériau d'appoint.

Sur la face F_{0,} opposée à la face F, on effectue, comme illustré aux figures 8 et 9, un retrait de matière du corps de lame 102. Ce retrait est fait par des techniques connues en soi, par exemple l'usinage, le meulage ou l'abrasion.

On retire la matière constitutive du corps de la lame au voisinage de l'arête tranchante 103 selon une direction et sur une surface permettant d'aligner, comme représenté à la figure 11, cette face F₀ dans le prolongement d'une des faces F_{A} de l'arête tranchante 103, une fois finie. Ainsi, les faces F₀ et F_{A} sont globalement coplanaires.

L'arête tranchante 103 finie a deux faces F_{A}, F_{B} orientées angulairement selon un angle β non nul, compris avantageusement entre 5 et 60 degrés de manière que ces deux faces F_{A}, F_{B} définissent une arête tranchante 103 en forme de pointe.

La formation de cette pointe s'effectue par des techniques connues en soi d'enlèvement de matériau M' à partir de la face F_{A}. Cet enlèvement, notamment par usinage, meulage ou abrasion, est localisé à une zone d'extrémité Z ou un bord libre de la bande 109. Cette zone d'extrémité Z est constituée par la région de la bande 109 ne reposant pas sur la face F du corps 102, une fois le retrait de la matière du corps 102 de la lame effectuée.

Ainsi, comme représenté à la figure 11, l'arête tranchante 103 est formée par une bande 109 de matériau d'appoint M', cette bande reposant, partiellement, sur un bord du corps de lame 102.

Dans une autre configuration, on peut prévoir un retrait ou un lamage dans la face F du corps 102, de manière à former une zone de réception du matériau d'appoint M'. La profondeur de ce retrait ou lamage est adaptée pour que, une fois déposée, la face supérieure libre de la bande 109 de matériau d'appoint M' soit globalement coplanaire à la face F du corps 102.

On peut envisager, dans un autre mode de réalisation, le dépôt du matériau d'appoint M' sur seulement une partie de l'arête tranchante, par exemple sur la partie la plus fréquemment sollicitée, afin d'augmenter la durée de vie de cette seule partie.

Dans une autre configuration, les faces F_{A}, F_{B} de l'arête 103 sont perpendiculaires.

Dans un autre mode de réalisation, on peut utiliser un matériau d'appoint d'une teinte différente de la teinte du corps de la lame. De même les dimensions et les formes de la bande de matériau d'appoint peuvent être différentes de celles décrites.

Dans les deux modes de mise en oeuvre du procédé évoqué ci-dessus, il est possible d'effectuer un marquage de la partie de l'arête tranchante formée par le matériau d'appoint.

## Revendications

1. Procédé de fabrication d'une lame pour outil tranchant, notamment pour un couteau, une paire de ciseaux, une scie, un appareil ménager ou électroménager, ou encore une machine industrielle, cette lame (1) étant réalisée en un acier ou un alliage d'aciers inoxydables et comprenant au moins une arête tranchante (3 ; 103) s'étendant sur au moins une partie de sa périphérie, comprenant les étapes suivantes :
- réaliser un corps (2 ; 102) de lame possédant au moins un bord libre (F ; 4) prévu au voisinage de l'emplacement de la ou de chaque arête tranchante (3 ;103),
- projeter sur au moins un bord libre (F ; 4) un matériau d'appoint (M ; M'), sous forme d'une poudre (5 ; 105) d'une dureté supérieure à la dureté du corps de la lame,
- soumettre la poudre (5 ; 105) de matériau d'appoint à un faisceau laser (8) de manière à former un cordon (6) ou une bande (109) sur au moins une partie dudit bord (libre (4 ; F),
- former l'arête tranchante (3 ; 103) dans le cordon (6) ou la bande (109) de matériau d'appoint (M ; M'),
où procedé dans lequel la poudre (5, 105) comprend au moins deux éléments (50, 51) liés entre eux et dans lequel on effectue une opération de trempe et revenu sur le corps de la lame (2 ; 102) équipé du cordon (6) ou de la bande (109) de matériau d'appoint (M ; M'), et on réalise l'intégralité de l'étape de mise en forme de cette arête tranchante à froid, lorsque le corps de lame ainsi que le cordon ou la bande ne sont plus malléables, après l'opération de trempe et revenu.

2. Procédé selon la revendication précédente, **caractérisé en ce qu'**on réalise l'intégralité de l'étape de mise en forme de cette arête tranchante par enlèvement de matière.

3. Procédé selon l'une des revendications précédentes, **caractérisé en ce que** l'arête tranchante a deux faces définissant un fil tranchant.

4. Procédé selon la revendication précédente, **caractérisé en ce que** les deux faces sont orientées selon un angle compris entre 5 et 60°.

5. Procédé selon l'une des revendications 1 à 4, **caractérisé en ce que** ledit bord libre est formé par un méplat (4) s'étendant perpendiculairement à un plan principal (P) du corps (2) de la lame.

6. Procédé selon l'une des revendications 1 à 4, **caractérisé en ce que** ledit bord libre est formé par une partie (F) du corps (102) de la lame s'étendant selon un plan principal orienté selon un angle (α) non nul par rapport à un plan principal (P') du corps (102) de la lame.

7. Procédé selon l'une des revendications précédentes, **caractérisé en ce que** le corps (2 ; 102) de la lame présente des dimensions légèrement inférieures à celles de la lame définitive (1).

8. Procédé selon l'une des revendications 2 à 7, **caractérisé en ce qu'**on réalise l'arête tranchante (3 ; 103) par meulage, usinage ou abrasion au moins du cordon (6) ou de la bande (109) de matériau d'appoint (M ; M').

9. Procédé selon la revendication 8, **caractérisé en ce qu'**on usine ou on meule le corps (2 ; 102) de la lame en même temps qu'on réalise l'arête tranchante (3 ; 103) par usinage ou meulage.

10. Procédé selon la revendication 8, **caractérisé en ce qu'**on usine ou on meule le corps (2) de la lame avant l'étape de formation du cordon (6) de matériau d'appoint.

11. Procédé selon la revendication 5 ou 6, **caractérisé en ce que** ledit retrait de matière est effectué à partir d'un bord (F₀) du corps (102) de la lame opposé par rapport au plan principal (P') au bord (F) du corps (102) de la lame sur lequel est déposé le matériau d'appoint (M').

## Claims

1. Method for manufacturing a blade for a cutting tool, in particular for a knife, a pair of scissors, a saw, a domestic or electrical appliance, or even an industrial machine, said blade (1) being produced from a steel or an alloy of stainless steels and comprising at least one cutting edge (3; 103) extending over at least one part of its periphery, comprising the following steps:
- producing a blade body (2; 102) having at least one free edge (F; 4) provided in the vicinity of the location of the or each cutting edge (3; 103),
- spraying over at least one free edge (F; 4) an additional material (M; M') in the form of a powder (5; 105) of a hardness which is greater than the hardness of the body of the blade,
- subjecting the powder of the additional material (5; 105) to a laser beam (8) so as to form a bead (6) or a strip (109) over at least one part of said free edge (4; F),
- forming the cutting edge (3; 103) in the bead (6) or the strip (109) of additional material (M; M'),
method where the powder (5, 105) comprises at least two elements (50, 51) bonded together and in which a hardening and tempering operation is carried out on the body of the blade (2; 102) provided with the bead (6) or the strip (109) of additional material (M; M') and the entire step of forming said cutting edge is carried out cold, when the blade body and the bead or the strip are no longer malleable, after the hardening and tempering operation.

2. Method according to the preceding claim, **characterized in that** the entire step of forming said cutting edge is carried out by the removal of material.

3. Method according to one of the preceding claims, **characterized in that** the cutting edge has two faces defining a sharp edge.

4. Method according to the preceding claim, **characterized in that** the two faces are oriented at an angle of between 5 and 60°.

5. Method according to one of Claims 1 to 4, **characterized in that** said free edge is formed by a flattened portion (4) extending perpendicular to a principle plane (P) of the body (2) of the blade.

6. Method according to one of Claims 1 to 4, **characterised in that** said free edge is formed by a part (F) of the body (102) of the blade extending along a principal plane oriented at a non-zero angle (α) relative to a principal plane (P') of the body (102) of the blade.

7. Method according to one of the preceding claims, **characterised in that** the body (2; 102) of the blade has slightly smaller dimensions than those of the final blade (1).

8. Method according to one of Claims 2 to 7, **characterised in that** the cutting edge (3; 103) is produced by grinding, machining or abrading at least the bead (6) or the strip (109) of additional material (M; M').

9. Method according to Claim 8, **characterised in that** the body (2; 102) of the blade is machined or ground at the same time as the cutting edge (3; 103) is produced by machining or grinding.

10. Method according to Claim 8, **characterised in that** the body (2) of the blade is machined or ground before the step of forming the bead (6) of additional material.

11. Method according to Claim 5 or 6, **characterised in that** said removal of material is carried out from one edge (F₀) of the body (102) of the blade which, relative to the principal plane (P'), opposes the edge (F) of the body (102) of the blade on which the additional material (M') is deposited.

## Patentansprüche

1. Verfahren zur Herstellung einer Klinge für ein Schneidwerkzeug, insbesondere für ein Messer, eine Schere, eine Säge, ein Haushaltsgerät oder ein Elektrohaushaltsgerät, oder auch eine Industriemaschine, wobei diese Klinge (1) aus einem Stahl oder aus einer Legierung von rostfreien Stählen hergestellt ist und mindestens eine Schneidkante (3; 103) enthält, die sich über mindestens einen Teil ihres Umfangs erstreckt, das die folgenden Schritte aufweist:
- Herstellen eines Klingenkörpers (2; 102), der mindestens einen freien Rand (F; 4) besitzt, der in der Nähe der Stelle der oder jeder Schneidkante (3; 103) vorgesehen ist,
- Aufspritzen eines Zusatzwerkstoffs (M; M') in Form eines Pulvers (5; 105) einer größeren Härte als die Härte des Körpers der Klinge auf mindestens einen freien Rand (F; 4),
- Aussetzen des Zusatzwerkstoffpulvers (5; 105) einem Laserstrahl (8), um auf mindestens einem Teil des freien Rands (4; F) einen Wulst (6) oder ein Band (109) zu formen,
- Formen der Schneidkante (3; 103) in dem Wulst (6) oder dem Band (109) von Zusatzwerkstoff (M; M'),
wobei das Pulver (5, 105) mindestens zwei miteinander verbundene Elemente (50, 51) enthält, und wobei ein Vorgang des Vergütens an dem mit dem Wulst (6) oder dem Band (109) von Zusatzwerkstoff (M; M') ausgestatteten Körper der Klinge (2; 102) durchgeführt wird und wobei die Gesamtheit des Schritts der Formgebung dieser Schneidkante kalt durchgeführt wird, wenn der Klingenkörper sowie der Wulst oder das Band nicht mehr weich sind, nach dem Vorgang des Vergütens.

2. Verfahren nach dem vorhergehenden Anspruch, **dadurch gekennzeichnet, dass** die Gesamtheit des Schritts der Formgebung dieser Schneidkante durch Zerspanung durchgeführt wird.

3. Verfahren nach einem der vorhergehenden Ansprüche, **dadurch gekennzeichnet, dass** die Schneidkante zwei Seiten hat, die einen Schneidfaden definieren.

4. Verfahren nach dem vorhergehenden Anspruch, **dadurch gekennzeichnet, dass** die zwei Seiten mit einem Winkel ausgerichtet sind, der zwischen 5 und 60° liegt.

5. Verfahren nach einem der Ansprüche 1 bis 4, **dadurch gekennzeichnet, dass** der freie Rand von einer Abflachung (4) gebildet wird, die sich lotrecht zu einer Hauptebene (P) des Körpers (2) der Klinge erstreckt.

6. Verfahren nach einem der Ansprüche 1 bis 4, **dadurch gekennzeichnet, dass** der freie Rand von einem Teil (F) des Körpers (102) der Klinge gebildet wird, der sich gemäß einer Hauptebene erstreckt, die mit einem Winkel (α) ungleich Null bezüglich einer Hauptebene (P') des Körpers (102) der Klinge ausgerichtet ist.

7. Verfahren nach einem der vorhergehenden Ansprüche, **dadurch gekennzeichnet, dass** der Körper (2; 102) der Klinge Abmessungen aufweist, die geringfügig kleiner als diejenigen der endgültigen Klinge (1) sind.

8. Verfahren nach einem der Ansprüche 2 bis 7, **dadurch gekennzeichnet, dass** die Schneidkante (3; 103) durch Schleifen, spanende Bearbeitung oder Abrieb mindestens des Wulsts (6) oder des Bands (109) von Zusatzwerkstoff (M; M') hergestellt wird.

9. Verfahren nach Anspruch 8, **dadurch gekennzeichnet, dass** der Körper (2; 102) der Klinge zur gleichen zeit spanend bearbeitet oder geschliffen wird, wie die Schneidkante (3; 103) durch spanende Bearbeitung oder Schleifen hergestellt wird.

10. Verfahren nach Anspruch 8, **dadurch gekennzeichnet, dass** der Körper (2) der Klinge vor dem Schritt des Formens des Wulsts (6) von Zusatzwerkstoff spanend bearbeitet oder geschliffen wird.

11. Verfahren nach Anspruch 5 oder 6, **dadurch gekennzeichnet, dass** das Entfernen von Material ausgehend von einem Rand (F₀) des Körpers (102) der Klinge entgegengesetzt zur Hauptebene (P') an dem Rand (F) des Körpers (102) der Klinge durchgeführt wird, auf den der Zusatzwerkstoff (M') aufgebracht wird.
